# EUROPÄISCHE PATENTSCHRIFT

(11) **EP 1 547 881 B1**
(45) Veröffentlichungstag und Bekanntmachung des Hinweises auf die Patenterteilung: **26.05.2010**
(21) Anmeldenummer: 04026424.4
(22) Anmeldetag: 08.11.2004
(51) Int. Cl.: B60S 1/16, B60S 1/24, F16L 13/14

(54) **Hebel-Welle-Vorrichtung, Verfahren zur Herstellung einer Hebel-Welle-Vorrichtung und Scheibenwischanlage mit einer Hebel-Welle-Vorrichtung**
Lever-shaft-apparatus, manufacturing process for a lever-shaft-apparatus and a windscreen wiper system with a lever-shaft-apparatus
Dispositif levier-arbre, procédé de fabrication d'un dispositif levier-arbre et un système d'essuie-glace comprenant un dispositif levier-arbre

(30) Priorität: 23.12.2003 DE 10361454
(43) Veröffentlichungstag der Anmeldung: 29.06.2005
(73) Patentinhaber: ROBERT BOSCH GMBH, 70442 Stuttgart (DE)
(72) Erfinder: Marke, Stefan, 77815 Buehl (DE)

(56) Entgegenhaltungen:
- EP-A- 0 316 832
- WO-A-2004/016482
- DE-A1- 4 307 994
- FR-A- 2 114 161

## Beschreibung

### Stand der Technik

Die Erfindung geht aus von einem Verfahren zur Herstellung einer Hebel-Welle-Vorrichtung nach dem Oberbegriff des unabhängigen Anspruchs.

Es sind verschiedene Techniken bekannt, mit denen eine Hebel-Welle-Vorrichtung, insbesondere für Scheibenwischanlagen, hergestellt werden kann und mit der ein Drehmoment von einer Antriebseinheit auf einen Hebel übertragen kann. Bei einer glatten Welle kann ein Reibschluss hergestellt werden, indem der Hebel mit einer Schraube gespannt wird und eine Klemmverbindung herstellt. Ein Formschluss kann erzielt werden, indem eine Welle mit konischem Rändel mit einem axial aufgesetzten Hebel mit einer Mutter verschraubt wird. Alternativ kann der Hebel mit der Welle vernietet werden.

Aus der DE 199 47 629 A1 ist eine Wellen-Kurbel-Verbindung bekannt, die durch eine Pressverbindung gebildet ist. Dabei wird eine Getriebeabtriebswelle einer Scheibenwischeinrichtung drehfest mit einer Kurbel verbunden. Unter anderem wird vorgeschlagen, dass ein Bereich der Stirnseite der Getriebeabtriebswelle mit der Kurbel verstemmt wird, indem ein vor dem Verstemmvorgang freies, die Kurbel überragendes Ende der Getriebeabtriebswelle plastisch so verformt wird, dass das vormals freie Ende die Kurbel wenigstens abschnittsweise geringfügig hintergreift. Bei der Herstellung der Pressverbindung wird die Getriebeabtriebswelle zwangsläufig axial stark belastet. Das Fügen muss erfolgen, bevor der Antriebsmotor verschlossen wird.

Weiterhin ist aus der DE 43 07 994 A1 eine Hebel-Welle-Vorrichtung mit einem aus Tiefziehblech gestalteten Hebel bekannt, der mit einem Durchzug versehen ist, in welchen eine Welle eingreift und durch Rollieren der Durchzugsfläche in axialer Richtung an dem Hebel befestigt wird, wobei der Durchzug im Verbindungsbereich eine kreis-zylinderförmige Kontur aufweist.

### Vorteile der Erfindung

Bei einem erfindungsgemäßen Verfahren zur Herstellung einer Hebel-Welle-Vorrichtung, insbesondere für eine Hebel-Welle-Vorrichtung einer Scheibenwischanlage, wird eine Welle an einer Stirnfläche mit einem winklig zur Welle angeordneten Hebel verbunden, wobei zur Befestigung des Hebels auf der Welle der Hebel in einem Verbindungsbereich mit der Welle wenigstens bereichsweise durch Kaltumformen plastisch verformt wird, wobei die Welle zur Befestigung in eine Bohrung des Hebels eingeführt wird, und wobei der Hebel in einem beliebigen Winkel zur Welle angeordnet wird. Das Verfahren zeichnet sich dadurch aus, dass die Bohrung mit einer von einem Kreis abweichenden Kontur gefertigt, und der Hebel an der Bohrung mit radial, beziehungsweise etwa radial zur Welle einwirkenden Kräften verformt wird. Da der Hebel mit radial zur Welle wirkenden Kräften verformt wird, kann ein Einwirken von Axialkräften auf die Welle vermieden werden. Dies erlaubt einen Fügevorgang an einem fertig geschlossenen Motor.

Bei einer Hebel-Welle-Vorrichtung, insbesondere für eine Scheibenwischanlage, ist eine Welle in einem Verbindungsbereich zwischen einem Hebel und der Welle wenigstens bereichsweise von plastisch verformtem Hebelmaterial des Hebels umgeben. Dadurch kann ein Formschluss oder Reibschluss zwischen Hebel und Welle hergestellt und ein ausreichendes Drehmoment von der Welle auf den Hebel übertragen werden. Bei einem bevorzugten Kaltumform-Fügevorgang kann vermieden werden, Axialkräfte auf die Welle zu übertragen. Der Fügevorgang kann an der Welle eines fertig geschlossenen Motors vorgenommen werden. Dies erleichtert die Herstellung und spart Kosten in der Produktion. Der Hebel kann in beliebigen Winkelstellungen zur Welle befestigt werden. Eine Verbindung zwischen Welle und Hebel kann bereits mit geringstem oder sogar mit verschwindendem Wellenüberstand zuverlässig realisiert werden. Damit lässt sich eine geringe Höhe der Hebel-Wellen-Vorrichtung erzielen. Optional ist jedoch bei Bedarf auch ein wählbarer Wellenüberstand realisierbar, was günstig für eine Drehmomentübertragung von der Welle auf den Hebel ist. Im Gegensatz zu Schraubverbindungen können sowohl Montageteile als auch Fertigungsschritte in der Produktion eingespart werden.

Weist der Hebel eine Bohrung auf, in welche die Welle eingreift, kann eine geeignete geometrische Abstimmung zwischen einer Kontur der Welle und einer Kontur der Bohrung vorgenommen werden. Vorzugsweise weist die Bohrung eine von einem Kreis abweichende Kontur, insbesondere mit Krümmungsänderungen und/oder Kanten auf. Alternativ ist auch ein gegabelter Hebel denkbar, der die Welle nur teilweise umgreift. Die Kontur der Bohrung oder gegebenenfalls der Gabel kann insbesondere rautenförmig, tropfenförmig, birnenförmig, doppelbirnenförmig sein, auch sind kantige Konturen denkbar.

Ein vorteilhafter Reibschluss oder Formschluss lässt sich erreichen, wenn die Welle zumindest im Verbindungsbereich eine kantige Kontur aufweist. Die Kontur der Welle und die Kontur des Hebels werden zweckmäßigerweise aufeinander abgestimmt, wobei vorteilhafte Kombinationen der Konturen und/oder Durchmesser und/oder Materialkombinationen zur Erzielung eines optimierten Formschlusses oder Reibschlusses ausgewählt werden können.

Die Sicherheit der Verbindung zwischen Welle und Hebel kann verbessert werden, wenn die Welle ausgehend von der Stirnfläche einen Absatz im Verbindungsbereich aufweist, auf dem der Hebel aufgesetzt ist. Der Hebel lässt sich einfach positionieren; die Montage wird vereinfacht. Günstig ist, wenn die Kontur der Welle am von dem Hebel am Absatz überdeckten Bereich kantig ausgebildet ist, womit ein vorteilhafter Kraftschluss zwischen Welle und Hebel erreicht werden kann.

Alternativ kann im Verbindungsbereich der Welle eine Nut vorgesehen sein, die plastisch verformtes Hebelmaterial aufweist. Vorzugsweise ist die Nut als umlaufende Ringnut ausgebildet. Ein Nutgrund weist zweckmäßigerweise eine kantige Kontur auf, um einen günstigen Kraftschluss zwischen Hebel und Welle zu ermöglichen.

Besonders einfach und schonend für die Welle und ein damit verbundenes Getriebe und/oder einen damit verbundenen Motor ist die Hebel-Welle-Vorrichtung herzustellen, wenn das Hebelmaterial eine - geringere elastische Streckgrenze aufweist als ein Wellenmaterial, aus dem die Welle wenigstens im Verbindungsbereich gebildet ist. Sinnvollerweise ist der Unterschied so groß gewählt, dass der bevorzugte Kaltumform-Fügevorgang im Wesentlichen auf den Hebel beschränkt bleibt und eine Beeinflussung der Welle unterbleibt. Damit kann gewährleistet werden, dass die Welle unbeschädigt bleibt, wenn der Hebel im Verbindungsbereich mit der Welle mit Druck beaufschlagt und umgeformt wird. Die Welle kann bereichsweise unterschiedliche Streckgrenzen aufweisen und aus unterschiedlichen Materialien gebildet oder aus einem Material gebildet sein. Vorzugsweise ist die elastische Streckgrenze des Wellenmaterials größer als die elastische Streckgrenze des Hebelmaterials.

Bei einer vorteilhaften Scheibenwischanlage mit einer Hebel-Welle-Vorrichtung weist die Hebel-Welle-Vorrichtung in einem Verbindungsbereich zwischen einer Welle und einem Hebel ein plastisch verformtes Hebelmaterial auf. Der Hebel ist vorzugsweise als Kurbelplatte ausgebildet, die vorteilhafterweise eben ausgeführt sein kann. Ein Kröpfen der Kurbelplatte kann entfallen. Die Hebel-Welle-Vorrichtung zeichnet sich durch eine geringe Höhe aus.

### Zeichnungen

Die Erfindung wird nachfolgend in Ausführungsbeispielen anhand der zugehörigen Zeichnungen näher erläutert. Es zeigen:
- Figur 1a, b:: eine Aufsicht auf einen Scheibenwischerantrieb mit unverformtem Hebel auf einer Welle vor einem Fügevorgang (a) und ein Detail einer Hebel-Welle-Vorrichtung nach dem Fügevorgang mit einem Wellenüberstand (b);
- Figur 2a, b:: einen Längsschnitt durch eine Welle mit einem Absatz an einem Wellenende (a) und mit einer umlaufenden Nut am Wellenende (b);
- Figur 3:: schematisch einen Querschnitt durch einen Verbindungsbereich eines Hebels mit einer Welle mit von einem Kreis abweichenden Konturen;
- Figur 4a, b:: eine Aufsicht auf eine in einem trapezförmigen Umformwerkzeug angeordnete Hebel-Welle-Vorrichtung (a) und eine Ansicht schräg von vorne (b); und
- Figur 5:: eine Aufsicht auf eine in einem maulförmigen Umformwerkzeug angeordnete Hebel-Welle-Vorrichtung.

### Beschreibung der Ausführungsbeispiele

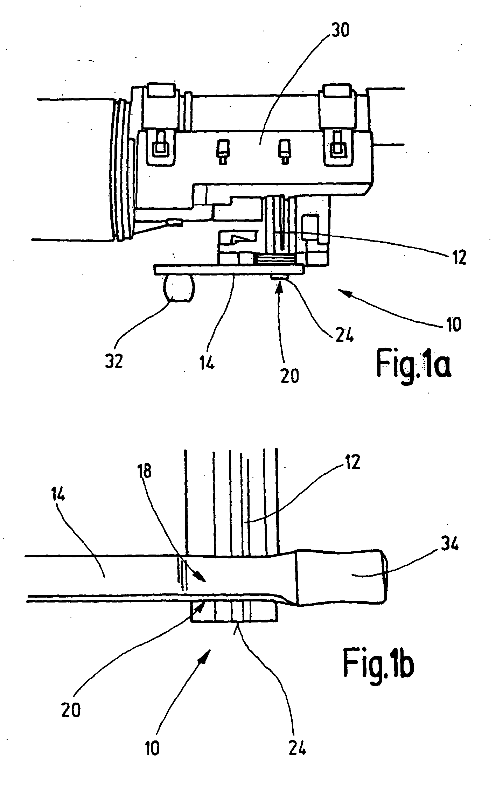

Fig. 1 a zeigt eine Aufsicht auf einen nicht näher erläuterten üblichen Scheibenwischerantrieb 30 mit einem unverformtem Hebel 14 auf einer Welle 12 vor einem Fügevorgang zur Bildung einer Hebel-Welle-Vorrichtung 10 (Fig. 1b). Der Hebel 14 ist als ebene Kurbelplatte zum Betätigen eines nicht dargestellten Scheibenwischers bzw. Wischgestänges ausgebildet. Auf einer von der Welle 12 abgewandten Flachseite des Hebels 14 ist ein üblicher Gelenkkopf 32 vorgesehen. Am Gelenkkopf 32 kann beispielsweise ein übliches Wischgestänge befestigt werden, welches Wischblätter antreibt, die über eine Scheibe eines Fahrzeugs wischen. Die Welle 12 greift in eine Bohrung 20 des Hebels 14 ein.

Fig. 1b zeigt ein Detail einer Hebel-Welle-Vorrichtung 10 nach dem Fügevorgang mit einem Wellenüberstand. Eine Welle 12 durchsetzt in eine Bohrung 20 eines winklig abstehenden Hebels 14 und ragt an einem Wellenende mit ihrer Stirnfläche 24 über den Hebel 14 hinaus. In einem Verbindungsbereich 18 ist erkennbar, dass der Hebel 14 durch die Kaltumformung des Hebels 14 im Verbindungsbereich 18 gegenüber einem Endstück 34 verjüngt ist.

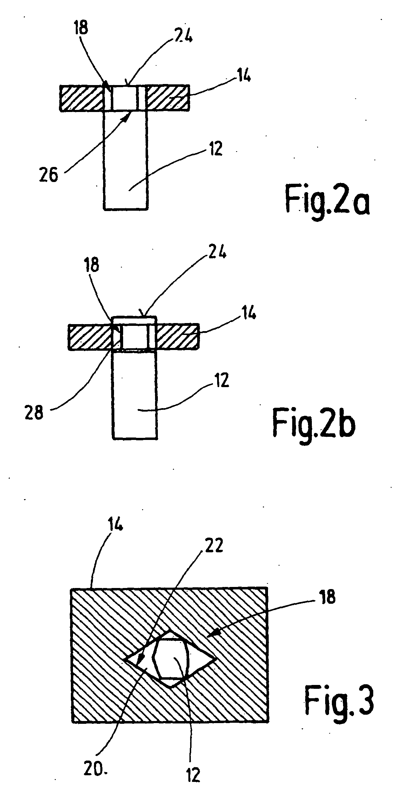

Fig. 2a zeigt einen Längsschnitt durch eine Welle 12 mit einem Absatz 26 an einem Wellenende, wobei ein Hebel 14 auf dem Absatz 26 aufsitzt. Mit einem verjüngten Wellenende greift die Welle 12 in eine Bohrung 20 des Hebels 14 ein. In den Figuren werden für gleiche Elemente gleiche Bezugszeichen verwendet. Die Stirnfläche 24 schließt im Wesentlichen bündig mit einer von der Welle 12 abgewandten Flachseite des Hebels 14 ab. Fig. 2b zeigt eine Variante, bei dem an einem Wellenende einer Welle 12 eine umlaufende Nut 28 vorgesehen ist. Die Welle 12 ragt in eine Bohrung 20 eines Hebels 14 und weist einen Überstand auf, so dass deren Stirnfläche 24 nicht bündig mit einer von der Welle 12 abgewandten Flachseite des Hebels 14 abschließt, sondern diese überragt.

Fig. 3 zeigt schematisch einen Querschnitt durch einen Verbindungsbereich 18 eines Hebels 14 mit einer Welle 12 mit von einem Kreis abweichenden Konturen vor einem Fügevorgang. Die von einem Kreis abweichende Kontur 22 einer Bohrung 20 weist Rautenform auf, während die Welle 12 eine kantige Kontur aufweist. Nach dem Fügevorgang ist zumindest bereichsweise in einem Verbindungsbereich 18 zwischen Welle 12 und Hebel 14 plastisch verformtes Hebelmaterial in reibschlüssigem oder formschlüssigem Kontakt mit der Welle 12.

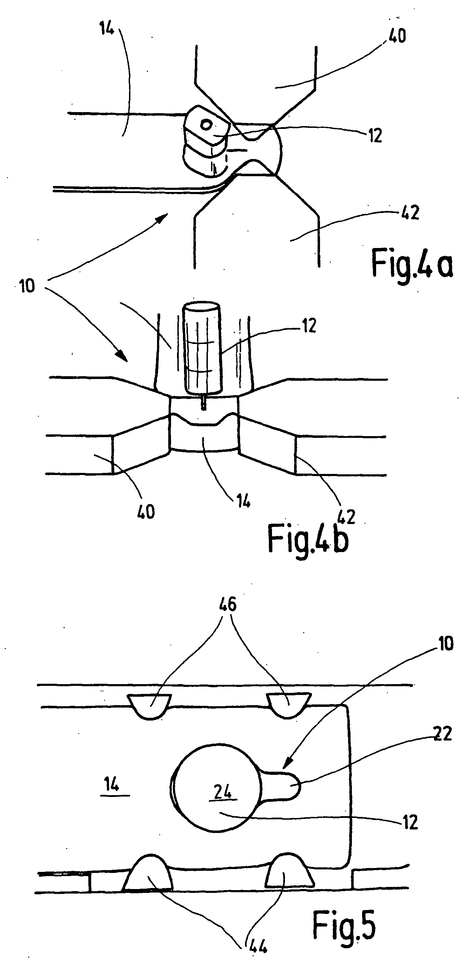

Fig. 4a zeigt eine Aufsicht auf eine in einem bevorzugten trapezförmigen Umformwerkzeug angeordnete Hebel-Welle-Vorrichtung 10.

Ein Wellenende der Welle 12 wird von zwei trapezförmigen Stempeln 40, 42 mit axialer Kraft beaufschlagt und verformt sich plastisch. Dabei wird die Welle 12 wenigstens bereichsweise mit plastisch verformtem Hebelmaterial umgeben und ein Reibschluss oder Formschluss gebildet. Fig. 4b zeigt und eine Ansicht schräg von vorne. Es ist deutlich erkennbar, wie das Wellenende verformt wurde.

Fig. 5 zeigt eine Aufsicht auf eine in einem bevorzugten maulförmigen Umformwerkzeug angeordnete Hebel-Welle-Vorrichtung 10. Eine Welle 12 ragt mit ihrer Stirnfläche 24 in eine Bohrung 20 eines Hebels 14. Die Bohrung 20 weist eine in etwa birnenförmige Kontur 22 auf. Die Welle 12 befindet sich in etwa im Zentrum von zwei sich gegenüberliegenden Paaren von Pratzen 44, 46, welche von beiden Schmalseiten des Hebels 14 Druck auf den Hebel 14 ausüben und diesen in seiner Mitte, in der sich die die Welle 12 aufweisende Bohrung 20 befindet, plastisch verformt. Im Bereich der Pratzen 44, 46 ist deutlich zu erkennen, dass der Hebel 14 in diesem Bereich plastisch verformt ist. Die Stirnfläche 24 der Welle 12 ist dagegen völlig unverändert.

Bei einem vorteilhaften Verfahren zur Herstellung einer Hebel-Welle-Vorrichtung werden folgende Schritte vorgenommen. Eine Welle 12, bzw. ein kompletter Motor oder ein Getriebe mit einer Welle 12 wird in einem Werkzeug positioniert. Ein Hebel 14 wird winklig, beispielsweise senkrecht zur Welle 12 positioniert, wobei die Welle 12 in eine Bohrung 20 der Welle 12 eingreift. Welle 12 und Hebel 14 werden durch Kaltumformen gefügt, indem eine plastische Verformung des Hebelmaterials durch Einwirken radialer Umformkräfte erfolgt. Dabei wird eine Zugspannung im Hebelmaterial um die die Welle 12 aufweisende Bohrung 20 erzeugt. Beginnt das Hebelmaterial in die Bohrung 20 zu fließen, gelangt Hebelmaterial auf die Welle 12, bzw. an einen dort vorgesehenen Absatz 26 oder in eine Nut 28 und stellt dort einen Reibschluss oder Formschluss her.

## Patentansprüche

1. Verfahren zur Herstellung einer Hebel-Welle-Vorrichtung einer Scheibenwischanlage, wobei eine Welle (12) an einem Wellenende mit einem winklig zur Welle (12) angeordneten Hebel (14) verbunden wird, wobei zur Befestigung des Hebels (14) auf der Welle (12) der Hebel (14) in einem Verbindungsbereich (18) mit der Welle (12) wenigstens bereichsweise durch Kaltumformen plastisch verformt wird, wobei die Welle (12) zur Befestigung in eine Bohrung (20) des Hebels (14) eingeführt wird, und wobei der Hebel (14) in einem beliebigen Winkel zur Welle (12) angeordnet wird, **dadurch gekennzeichnet, dass** die Bohrung (20) mit einer von einem Kreis abweichenden Kontur gefertigt, und der Hebel (14) an der Bohrung (20) mit radial beziehungsweise etwa radial zur Welle (12) einwirkenden Kräften verformt wird.

2. Verfahren nach Anspruch 1, **dadurch gekennzeichnet, dass** eine geeignete geometrische Abstimmung zwischen einer Kontur der Welle (12) und einer Kontur der Bohrung (20) vorgenommen wird.

3. Verfahren nach einem der vorhergehenden Ansprüche, **dadurch gekennzeichnet, dass** die Kontur der Bohrung (20) mit Krümmungsänderungen und/oder Kanten gefertigt wird.

4. Verfahren nach einem der vorhergehenden Ansprüche, **dadurch gekennzeichnet, dass** die Kontur der Bohrung (20) rautenförmig, tropfenförmig, birnenförmig oder doppelbirnenförmig gefertigt wird.

5. Verfahren nach einem der vorhergehenden Ansprüche, **dadurch gekennzeichnet, dass** Materialkombinationen zur Erzielung eines optimierten Formschlusses oder Reibschlusses ausgewählt werden.

6. Verfahren nach einem der vorhergehenden Ansprüche, **dadurch gekennzeichnet, dass** die Welle (12) ausgehend von einer Stirnfläche (24) einen Absatz im Verbindungsbereich aufweist, auf den der Hebel (14) aufgesetzt wird.

7. Verfahren nach einem der vorhergehenden Ansprüche, **dadurch gekennzeichnet, dass** die Kontur der Welle (12) am von dem Hebel (14) am Absatz überdeckten Bereich kantig ausgebildet wird.

8. Verfahren nach einem der vorhergehenden Ansprüche, **dadurch gekennzeichnet, dass** die Welle (12) im Zentrum von zwei sich gegenüberliegenden Paaren von Pratzen (44,46) angeordnet wird, welche von beiden Schmalseiten des Hebels (14) Druck auf den Hebel (14) ausüben und diesen in seiner Mitte, in der sich die die Welle (12) aufweisende Bohrung (20) befindet, plastisch verformen.

## Claims

1. Manufacturing process for a lever-shaft apparatus of a windscreen wiper system, wherein a shaft (12) is connected at one end to a lever (14) arranged in an angled manner with respect to the shaft (12), wherein, in order to fasten the lever (14) on the shaft (12), the lever (14) is plastically deformed at least in areas in a connecting region (18) to the shaft (12) by cold forming, wherein, for fastening purposes, the shaft (12) is introduced into a hole (20) in the lever (14), and wherein the lever (14) is arranged at any angle with respect to the shaft (12), **characterized in that** the hole (20) is made with a contour differing from a circle, and the lever (14) is deformed at the hole (20) by forces acting radially or approximately radially with respect to the shaft (12).

2. Process according to Claim 1, **characterized in that** a contour of the shaft (12) and a contour of the hole (20) are suitably geometrically coordinated.

3. Process according to one of the preceding claims, **characterized in that** the contour of the hole (20) is made with changes in curvature and/or with edges.

4. Process according to one of the preceding claims, **characterized in that** the contour of the hole (20) is made to be rhombic, drop-shaped, pear-shaped or double pear-shaped.

5. Process according to one of the preceding claims, **characterized in that** material combinations are selected so as to obtain an optimized form-fitting connection or frictional connection.

6. Process according to one of the preceding claims, **characterized in that**, starting from an end surface (24), the shaft (12) has a step in the connecting region, onto which the lever (14) is placed.

7. Process according to one of the preceding claims, **characterized in that** the contour of the shaft (12) is of polygonal design on the region covered on the step by the lever (14).

8. Process according to one of the preceding claims, **characterized in that** the shaft (12) is arranged in the centre of two opposite pairs of claws (44, 46) which exert pressure on the lever (14) from both narrow sides of the lever (14) and plastically deform said lever in the centre thereof, in which the hole (20) containing the shaft (12) is located.

## Revendications

1. Procédé de fabrication d'un dispositif levier-arbre d'une installation d'essuie-glace, dans lequel un arbre (12) est connecté, à une extrémité d'arbre, à un levier (14) disposé suivant un certain angle par rapport à l'arbre (12), dans lequel, pour la fixation du levier (14) sur l'arbre (12), le levier (14) est déformé plastiquement au moins en partie par formage à froid dans une région de connexion (18) à l'arbre (12), dans lequel l'arbre (12) est introduit dans un alésage (20) du levier (14) en vue de sa fixation et dans lequel le levier (14) est disposé suivant un angle quelconque par rapport à l'arbre (12), **caractérisé en ce que** l'alésage (20) est fabriqué avec un contour s'écartant d'un cercle, et le levier (14) est déformé au niveau de l'alésage (20) avec des forces agissant radialement ou approximativement radialement par rapport à l'arbre (12).

2. Procédé selon la revendication 1, **caractérisé en ce que** l'on effectue une adaptation géométrique appropriée entre un contour de l'arbre (12) et un contour de l'alésage (20).

3. Procédé selon l'une quelconque des revendications précédentes, **caractérisé en ce que** le contour de l'alésage (20) est fabriqué avec des variations de courbure et/ou des arêtes.

4. Procédé selon l'une quelconque des revendications précédentes, **caractérisé en ce que** le contour de l'alésage (20) est fabriqué en forme de losange, de goutte, de poire ou de double poire.

5. Procédé selon l'une quelconque des revendications précédentes, **caractérisé en ce que** les combinaisons de matériau sont choisies pour produire un engagement par coopération de forme optimisé ou un engagement par friction optimisé.

6. Procédé selon l'une quelconque des revendications précédentes, **caractérisé en ce que** l'arbre (12) présente, depuis une surface frontale (24), un décrochement dans la région de connexion, sur lequel le levier (14) est posé.

7. Procédé selon l'une quelconque des revendications précédentes, **caractérisé en ce que** le contour de l'arbre (12) dans la région recouverte par le levier (14) au niveau du décrochement est réalisé sous forme angulaire.

8. Procédé selon l'une quelconque des revendications précédentes, **caractérisé en ce que** l'arbre (12) est disposé au centre de deux paires opposées de griffes (44, 46), qui exercent depuis les deux petits côtés du levier (14) une pression sur le levier (14), et le déforment plastiquement dans son centre, dans lequel se trouve l'alésage (20) recevant l'arbre (12).
